# EUROPÄISCHE PATENTSCHRIFT

(11) **EP 0 662 403 B1**
(45) Veröffentlichungstag und Bekanntmachung des Hinweises auf die Patenterteilung: **04.03.1998**
(21) Anmeldenummer: 94120053.7
(22) Anmeldetag: 17.12.1994
(51) Int. Cl.: B60N 2/22, F16H 31/00

(54) **Sitzverstellung**
Seat adjustment
Réglage d'un siège

(30) Priorität: 23.12.1993 DE 9319848 U
(43) Veröffentlichungstag der Anmeldung: 12.07.1995
(73) Patentinhaber: Schwarzbich, Jörg, D-33615 Bielefeld (DE)
(72) Erfinder: Schwarzbich, Jörg, D-33615 Bielefeld (DE)
(74) Vertreter: TER MEER STEINMEISTER & PARTNER GbR

(56) Entgegenhaltungen:
- EP-A- 0 370 502
- DE-A- 4 134 353
- DE-U- 9 101 110
- DE-U- 9 315 132

## Beschreibung

Die Erfindung bezieht sich auf ein Getriebe für die Übertragung einer Drehbewegung in beiden Drehsinnen gemäß dem Oberbegriff des Anspruchs 1.

Derartige Getriebe sind bekannt; ein solches ist beispielsweise in dem DE 91 01 110 U1 beschrieben, wobei das Getriebe mit Freilauf und Hemmung derart versehen ist, daß es bei Kraftfluß von Antrieb zum Abtrieb in beiden Drehsinnen frei drehbar ist, während es bei Umkehrung des Kraftflusses sperrt. Solche Getriebe sind insbesondere für die Sitzverstellung in Kraftfahrzeugen mit in beiden Drehrichtungen wirkender Freilaufbremse bestimmt. Bei diesen Getrieben ist eine gestellfeste Nabe vorgesehen, auf der Antriebs- sowie Abtriebsrad gelagert sind, und auf denen paarweise angeordnete Klemmkörper des Freilaufs gleiten, und die von einem mit dem Antriebrad fest verbundenen Ring umgeben ist, dessen Innenfläche Schrägflächen zum Klemmen der Klemmkörper des Freilaufs aufweist. In Sperrstellung werden die Klemmkörper gegen diese Schrägflächen durch federn-elastische Elemente gedrückt und bei Verdrehen des Antriebsrades durch mit diesen federnd-elastischen Elemente verbundenen Klauen aus dieser Sperrstellung gebracht, wobei der Ring Vorsprünge aufweist, die in Ausnehmungen an den Klauen des Antriebsrades zum Verschieben der Klemmkörper aus ihrer Sperrstellung eingreifen.

Wie vorstehend ausgeführt, liegt das Hauptanwendungsgebiet derartiger Getriebe bei der Rücklehnenverstellung bei Sitzen von Kraftfahrzeugen. Für derartige Rücklehnenverstellungen sind zwei voneinander unterschiedliche Getriebe-Arten gebräuchlich: Einerseits wird mittels eines Auslöse- oder Sperrhebels eine diskontinuierliche Rastverstellung betätigt, wobei die flachere Neigung der Rückenlehne durch Druck gegen die Rücklehne und eine Rückholfeder nach Lösen des Sperrhebels eingestellt wird. Diese Konstruktion ist vornehmlich in den Vereinigten Staaten von Amerika verbreitet. Andererseits ist vornehmlich in Europa die kontinuierliche Verstellung verbreitet, bei der mittels eines Drehgriffes oder Handrades über einen Freilauf und ein Getriebe mit hoher Untersetzung eine kontinuierliche Verstellung der Rücklehne bewirkt wird.

Beide Konstruktionen haben Vorteile und Nachteile: Die Rastverstellung mittels eines Handhebels erlaubt ein Auslösen der Rücklehne und schnelles Verstellen in die gewünschte Lage. Das ist besonders dann auch von Interesse, wenn es sich um ein zweitüriges Kraftfahrzeug handelt, bei dem zum Erreichen der Rücksitze erwünscht ist, daß die Rücklehne schnell nach vorne geneigt werden kann, damit die Rücksitze besser zugänglich sind. Dazu ist es lediglich erforderlich mit dem Hebel auszulösen, die Rücklehne der Vordersitze wird dann von der eingebauten Feder in eine weit nach vorne geneigte Stellung gedrückt. Abgesehen davon, daß bei dieser Konstruktion die Einstellung der Rücklehne ausschließlich nur in bestimmte Raststellungen möglich ist, ist auch die Betätigung nicht problemlos, denn es muß nach Auslösen des Sperrhebels jeweils die Lehne gegen die Wirkung der Rückholfeder in die gewünschte Stellung gedrückt werden. Da derartige Konstruktionen kaum spielfrei sind, neigen sie auch zum Rappeln oder Klappern aufgrund der Fahrzeugbewegung.

Bei der Konstruktion für eine kontinuierliche Verstellung ist ein schnelles Vorklappen der Rücklehnen zum Erreichen der Rücksitze bei zweitürigen Fahrzeugen nicht möglich. Man hat sich deshalb schon mit einer von der Sitzverstellung völlig unabhängigen zusätzlichen Konstruktion beholfen, die ein solches Vorklappen der Rückenlehnen der Vordersitze ermöglicht. Das bedeutet jedoch einen erheblichen zusätzlichen konstruktiven und wirtschaftlichen Aufwand.

Die Erfindung hat sich die Aufgabe gestellt, ein Getriebe zu schaffen, mit dem es auf einfache und sehr wirtschaftliche Weise möglich ist, beide Konstruktionen derart miteinander zu verbinden, daß die jeweiligen Vorteile genutzt werden können.

Zur Lösung dieser Aufgabe ist ein Getriebe eingangs genannter Art dadurch gekennzeichnet, daß die Länge der Klauen etwa doppelt so groß ist, wie die Länge der Klemmkörper und ein Längenbereich der Klauen etwas weiter ist, als der andere Längenbereich, so daß bei axialer Verschiebung damit beide Klemmkörper aus der Sperrstellung gedrückt und in Freilauf-Stellung bringbar sind. Die im Ausführungsbeispiel mittels des Getriebes verstellbare Rücklehne von Vordersitzen eines Kraftfahrzeugs ist dann frei verschwenkbar und kann beispielsweise unter Federwirkung nach vorn klappen, um bei zweitürigen Wagen den Zugang zu den hinteren Sitzen zu erleichtern. Die Rücklehne wird dann anschließend wieder zumindest etwa in die gewünschte Stellung gegen die Wirkung der Feder geschwenkt und der Drehgriff wieder axial verschoben, so daß dann die kontinuierliche Feineinstellung der Neigung durchgeführt werden kann.

Im Einzelnen ist an dem Antriebsrad des Getriebes ein halsförmiger Flansch angeordnet, der an einen entsprechenden entgegengerichteten Flansch am Abtriebsrad geführt ist, wobei er in diesen eingreift oder diesen umgreift. Beide Flanschen sind an ihren Enden mit gegenständigen Vorsprüngen zur axialen Wegbegrenzung versehen, wobei der Verschiebeweg der Flanschen zumindest der doppelten axialen Länge der Klauen entspricht, die ihrerseits, mit dem Antriebsrad zusammenhängend, an einem ihrer Längsbereiche Einnehmungen aufweisen bzw. in ihrer Weite verengt sind, wobei diese Längsbereiche der Länge der Klemmkörper jeweils entsprechen.

Es ist erkennbar, daß die Erfindung erreicht, mit überraschend einfacher und verhältnismässig geringer Erweiterung oder Ergänzung des eingangs beschriebenen, bekannten Getriebes beide Funktionen zu erreichen, wobei in der Fertigung und Montage lediglich vernachlässigbare Mehrkosten entstehen.

Weitere Merkmale und Vorteile der Erfindung sind aus den Ansprüchen und der speziellen nachfolgenden Beschreibung zu entnehmen.

Die Erfindung wird anhand von Ausführungsbeispielen mit Bezug auf die Zeichnungen nachstehend im einzelnen näher erläutert. In den Zeichnungen zeigen:
- Figur 1:: Längsschnitt durch ein Getriebe nach der Erfindung in den beiden Stellungen;
- Figur 2:: Andere Ausführungsform, ebenfalls in beiden Stellungen;
- Figur 3:: Detailausschnitt aus der Figur 1;
- Figur 4:: Querschnitt entlang der Linie IV-IV (Fig. 3);
- Figur 5:: Abwicklung des Kreisumfangs nach Linie V-V (Fig. 3).

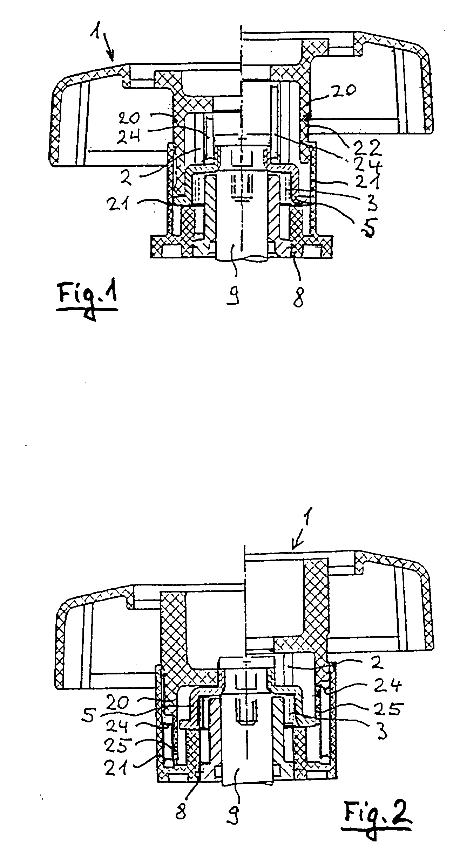

Der im wesentlichen gemeinsame Aufbau der beiden Ausführungsbeispiele nach den Figuren 1 und 2 ist im Folgenden beschrieben: Von einem Antriebsrad 1, das im Ausführungsbeispiel als Handrad ausgebildet ist, ragen in axialer Richtung kreisförmig angeordnete Klauen 2 ab, die in Durchbrüche 6 in einem Klemmring 5 eingreifen bzw. diese durchdringen. Innerhalb des Klemmrings 5 sind zwischen den Klauen 2 Klemmkörper 3 paarweise angeordnet, wobei zwischen jeweils zwei Klemmkörpern, die ein Paar bilden, federnd elastische Elemente 4 angeordnet sind, die bewirken, daß die Klemmkörper 3 gegen die Seitenflächen der Klauen 2 anliegen bzw. angedrückt werden.

In dem Klemmring 5 sind, außer einer Innenwandung, äußere Schrägflächen 10 ausgebildet, die ebenfalls paarweise angeordnet sind, wobei jeweils eine Schrägfläche 10 eines Paares einem der Klemmkörper eines Paares zugeordnet ist und zwischen den beiden Schrägflächen 10 eines Paares, im Bereich der federnd elastischen Elemente 4, aufgrund der gegeneinander gerichteten Schrägflächen 10 eines Paares der Durchmesser des Klemmrings 5 vergrößert ist.

Innerhalb des Klemmringes 5, der Klauen 2 und Klemmkörper 3 ist ein Innenring 7 angeordnet, der mit dem Abtriebsrad 8 verbunden ist, das seinerseits mit einem hier nicht dargestellten Untersetzungsgetriebe zusammenwirkt. Antriebsrad 1 und Abtriebsrad 8 sitzen auf einer gemeinsamen Achse 9, bzw. sind darauf gelagert. Bei anderen Ausführungsformen kann diese Achse 9 auch gestellfest sein, wenn der Klemmring 5 im Bereich des axialen Flansches 13 nicht mit der Achse sondern mit der darunterliegenden Lagerhülse des Abtriebsrades, dem Innenring 7, verbunden ist, bzw. an der Achse 9 frei drehbar gelagert ist. Bei den hier dargestellten Ausführungsbeispielen ist die Achse 9 über den Klemmring 5 mit dem Antriebsrad 1 verbunden. Der Klemmring 5 ist derart ausgebildet, daß er nach der einen Seite hin, zum Ende der Achse 9, mit einem Radialflansch 12 nach innen abgebogen ist, in dem die Durchbrüche 6 für die Klauen 2 angeordnet sind. Daran schließt ein axialer Flansch 13 an, der formschlüssig mit dem Ende der Achse 9 verbunden ist und dort von dem Kopf 14 einer in die Achse 9 eingesetzten Schraube 15 gehalten ist. Auf der anderen Seite des Klemmringes 5 ist ein nach außen gerichteter radialer Flansch 16 angeformt.

Die Funktion dieser Ausführungformen ist derart, daß beim Verdrehen des Antriebsrades 1 die Klauen 2 mit ihrer jeweiligen Stirnfläche, die in Drehrichtung gegen einen Klemmkörper anliegt, diesen aus seiner Klemmlage zwischen Schrägfläche 10 am Außenring und Gegenfläche 7 am Innenring gegen die Wirkung des federnd elastischen Elementes 4 herausdrücken und damit die Sperrung der Klemmkörper in beiden Drehrichtungen aufheben - da ja bei weiterer Drehung der dem durch die Klaue aus seiner Klemmlage herausgedrückten Klemmkörper gegenüberliegende Klemmkörper des Paares infolge der Verschiebung von Klemmring 5 gegenüber dem Innenring 6 ohnehin aus seiner Klemmstellung kommt. Diese Verschiebung wird dadurch bewirkt, daß zwischen den Klauen 2 und den Frontseiten der dafür vorgesehenen Durchbrüche 6 in dem Klemmring 5 ein geringer Abstand vorhanden ist, so daß beim Drehen des Antriebsrades 1 und damit beim Überwinden des Abstandes zwischen den Klauen und ihren Durchbrüchen 6 im Klemmring zunächst lediglich die gegen die entsprechende Frontseite der Klauen anliegenden Klemmkörper aus ihrer Klemmlage gelöst werden und sodann, die Klauen an den Frontseiten der Durchbrüche 6 des Klemmringes 5 anliegend, diesen Klemmring bei der weiteren Drehbewegung mitdrehen. Damit werden, wie schon gesagt, die jeweils gegenüberliegenden Klemmkörper 3 eines jeden Paares aus ihrer Klemmlage gelöst und damit die Drehbewegung auf das Abtriebsrad 8 übertragen. Es ist erkennbar, daß die beschriebene Wirkung - Aufhebung der Klemmung des Freilaufs - in beiden Drehrichtungen erfolgt und nicht umkehrbar ist, das heißt, daß eine drehende Krafteinleitung über das Abtriebsrad in jedem Falle die Klemmkörper in ihrer Klemmlage hält und demnach eine Übertragung der vom Abtriebsrad her eingeleiteten Drehbewegung auf das Antriebsrad 1 sperrt bzw. sicher verhindert.

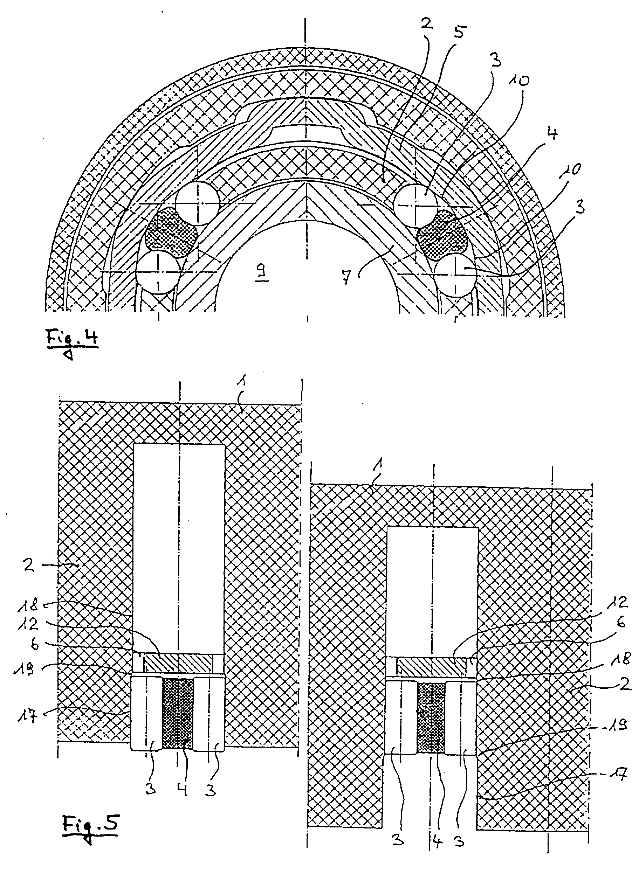

An dem Antriebsrad 1 sind die Klauen 2 etwa doppelt so lang wie die Klemmkörper 3. Die Klauen 2 sind in zwei Längenbereiche unterteilt, die jeweils einem Längenbereich der Klemmkörper 3 entsprechen. Der äußere Längenbereich 17 der Klauen 2 ist dabei etwas weiter ausgebildet als der innere Längenbereich 18, wobei zwischen diesen beiden Längenbereichen 17 und 18 ein schräger Übergang 19 geformt ist. Das Antriebsrad 1, beispielsweise als Handrad ausgebildet, ist gegenüber den übrigen Teilen des Getriebes axial verschieblich, so daß die Klauen in axialer Richtung durch die Durchbrüche 6 an dem radialen Flansch 12 des Klemmringes 5 hindurchgeschoben werden können, um in einer Stellung mit dem weiten Bereich 17 und in einer anderen Stellung mit dem engen Bereich 18 gegen die Klemmkörper 3 anzuliegen (s. Abwicklung in Fig. 5). Bei Anlage der Klauen 2 mit dem engen Bereich 18 an die Klemmkörper 3 werden beide Klemmkörper eines Paares gegen das dazwischenliegende, federnd elastische Element 4 gedrückt und damit aus ihrer Klemm- oder Sperrstellung gedrückt, so daß die Sperrwirkung in beiden Drehrichtungen aufgehoben ist. Damit ist die Einleitung einer Drehbewegung von dem Abtriebsrad her freigegeben, das Abtriebsrad ist nicht mehr versperrt oder gehemmt. Übertragen auf das Anwendungsbeispiel bei der Rücklehnenverstellung eines Autositzes bedeutet das, daß die mit dem Abtriebsrad verbundene Rückenlehne frei beweglich ist und in jede Winkelstellung gebracht werden kann, wobei zweckmäßig in bekannter Weise eine Feder angeordnet ist, die die Rückenlehne bis in die vorderste Winkel-Endstellung drückt. Danach kann die Rückenlehne gegen die Wirkung dieser Feder wieder frei in eine gewünschte Winkelstellung verschwenkt werden. Um die Rückenlehne in dieser Stellung zu arretieren, wird das Antriebsrad 1 (Handrad) axial verschoben, so daß nunmehr der weitere Bereich 17 zwischen den Klauen 2 gegen die Klemmkörper 3 anliegt, so daß diese von dem federelastischen Element 4 in ihre Klemmstellung zwischen den Schrägflächen 10 an dem Klemmring 5 gedrückt werden und somit jede Drehbewegung, die von dem Abtriebsrad her eingeleitet wird, sperren.

In dieser axial verschobenen Stellung (Abwicklung nach Fig. 5), in der die Klemmkörper 3 zwischen dem weiteren Bereich 17 der Klauen 2 liegen, funktioniert das Getriebe, wie das eingangs beschrieben wurde. Es ist ausschließlich nur eine Drehung des Antriebsrades 1 in beiden Drehrichtungen möglich. Jede Drehbewegung, die über das Abtriebsrad eingeleitet wird, ist gesperrt. Übertragen auf das Ausführungsbeispiel eines Autositzes kann mit dem Handrad (Antriebsrad 1) die Rückenlehne kontinuierlich in jede beliebige Winkelstellung verschwenkt werden, vorwärts und rückwärts, und die jeweils eingestellte Winkelstellung der Rückenlehne ist sicher gesperrt, so lange das Handrad in der axial verschobenen - hier herausgezogenen - Stellung bleibt.

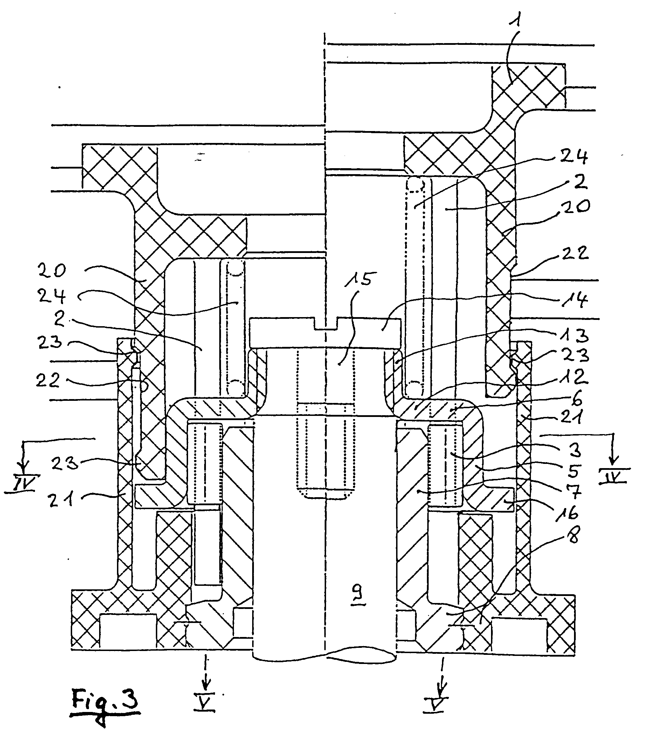

Um eine gute und sichere Führung des Antriebsrades 1 (Handrad) beim Wechsel zwischen den beiden Stellungen "herausgezogen" und "hineingeschoben" zu erreichen, ist beim Antriebsrad 1 ein halsförmiger Flansch 20 angeordnet, dem vom Abtriebsrad 8 ein entsprechender halsförmiger Flansch 21 entgegenragt, wobei sich diese beiden halsförmigen Flansche 20 und 21 gegenseitig überdecken oder übergreifen. In einem der beiden Flansche, hier in dem halsförmigen Flansch 20 am Antriebsrad 1, ist eine Vertiefung 22 über den gesamten Umfang eingeformt. Diese Vertiefung hat die Länge der erwünschten axialen Verschiebung des Antriebsrades 1, also etwa die Länge eines der Bereiche 17 oder 18 an den Klauen 2. Die dieser Vertiefung 22 gegenüberliegende Fläche des anderen halsförmigen Flansches (hier 21) ist mit einem Vorsprung 23 versehen, der in die Vertiefung 22 eingreift und damit die axiale Verschiebebewegung des halsförmigen Flansches 20 gegenüber dem halsförmigen Flansch 21 begrenzt. Die beiden verschiedenen Stellungen der Klauen 2 in axial verschobener Richtung sind der Figur 5 zu entnehmen, die eine Abwicklung einer Mantellinie um die Achse zeigt, entsprechend der Hilfslinien V-V in der Figur 3, wobei die Klemmkörper 3 in dieser Abwicklung liegen. Auf der linken Seite der Figur 5 ist die Funktionsstellung des Getriebes für den Antrieb ausschließlich vom Antriebsrad 1 her gezeigt. Die Klemmkörper 3 befinden sich in dem Bereich 17 an den Klauen. In dieser Stellung ist das Handrad, Antriebsrad 1, herausgezogen, und der Vorsprung 23 an dem halsförmigen Flansch 21 liegt gegen den unteren Anschlag der Vertiefung 22 an dem halsförmigen Flansch 20 an. Auf der rechten Seite der Figur 5 ist die Stellung gezeigt, in der die Klauen 2 mit dem Bereich 18 gegen die Klemmkörper 3 anliegen, das Handrad (Antriebsrad 1) ist in axialer Richtung eingedrückt. In dieser Stellung ist das Getriebe ausgerastet, also frei drehbar, und die Rückenlehne eines Autositzes kann frei verschwenkt werden.

Da diese eingedrückte Stellung des Handrades jeweils nur bei Bedarf und damit vorübergehend benötigt wird, während die herausgezogene Stellung, die jederzeit benötigte Stellung bzw. Betätigung ist, ist zwischen dem axial verschieblichen Antriebsrad 1 und dem Klemmring 5 eine Druckfeder 24 angeordnet, deren Widerstand überwunden werden muß, wenn "ausgekuppelt" werden soll, also wenn das Antriebsrad 1 eingedrückt wird. Durch die Druckfeder 24 wird das Antriebsrad 1 jeweils in der üblichen Gebrauchsstellung, axial herausgeschoben, zur kontinuierlichen Verstellung gehalten.

Nach dem Ausführungsbeispiel der Figur 2 ist die Druckfeder 24 an anderer Stelle angeordnet, und zwar unmittelbar an der Stirnfläche des halsförmigen Flansches 20, der an das Antriebsrad 1 angeformt ist einerseits, und andererseits an dem Abtriebsrad. Die Druckfeder 24 ist dabei an der Innenfläche des halsförmigen Flansches 21, das an das Abtriebsrad 8 angeformt ist, geführt. Um die Führung zu verbessern, ist an den halsförmigen Flansch 20 an dem Antriebsrad 1 eine innere Fortsetzung 25 in axialer Richtung angeformt.

Nach einer weiteren, hier nicht dargestellten Ausführungform ist in dem Antriebsrad 1 (Handrad) eine federbelastete Halteraste angeordnet, die in zwei verschiedene Raststellungen, beispielsweise an dem halsförmigen Flansch 21, einrasten kann. Das Handrad wird mit dieser jeweils zum Ausrasten zu betätigenden Raste in der jeweils erwünschten, axial eingeschobenen oder axial herausgezogenen Stellung gehalten.

## Patentansprüche

1. Getriebe für die Übertragung von Drehbewegungen in beiden Drehsinnen mit Freilauf und Hemmung, die derart wirken, daß es bei Kraftfluß von Antrieb zum Abtrieb beide Drehsinnen frei drehbar und bei Umkehrung des Kraftflusses gesperrt ist, insbesondere Getriebe für Sitzverstellung in Kraftfahrzeugen mit in beiden Drehrichtungen wirkender Freilaufbremse, wobei das Getriebe einen mit einem Antriebsrad (1) verbundenen, mit Schrägflächen (10) versehen Klemmring (5) und koaxial dazu einen mit einem Abtriebsrad (8) verbundenen Innenring (9), sowie zwischen diesen zwischen Klauen (2) paarweise angeordnete Klemmkörper (3) mit federn-elastischen Elemente (4) zwischen ihnen aufweist, die in Freilaufstellung zwischen Innen- und Klemmring gleiten und in Sperrstellung gegen desen Schrägflächen (10) gedrückt sind, und die bei Verdrehen des Antriebsrades (1) durch mit diesem verbundene Klauen (2) aus Sperrstellung in Freilaufstellung überführbar sind, wobei Klemmring (5) und Klauen (2) formschlüssig miteinander zusammenwirkende Mittel aufweisen, zum Verschieben der Klemmkörper (3) aus Sperrstellung in Freilauf-Stellung, **dadurch gekennzeichnet,** daß die Länge der Klauen (2) etwa doppelt so groß ist, wie die Länge der Klemmkörper (3) und ein Längenbereich (17) der Klauen (2) etwas weiter ist, als der andere Längenbereich (18), so daß die Klemmkörper (3) bei axialer Verschiebung aus Sperrstellung in Freilauf-Stellung bringbar sind.

2. Getriebe nach Anspruch 1, **dadurch gekennzeichnet**, daß am Antriebsrad (1) ein halsförmiger Flansch (20) angeordnet ist, der an einem entsprechenden, entgegengerichteten Flansch (21) am Abtriebsrad (8) ein- oder umgreifend geführt ist und beide Flanschen (20, 21) an ihren Enden mit gegenständigen Vorsprüngen (22, 23) zur axialen Wegbegrenzung aufweisen, wobei der Verschiebeweg der Flanschen (20, 21) zumindest der doppelten axialen Länge der Klauen (2) entspricht, die ihrerseits, mit dem Antriebsrad (1) zusammenhängend, an dem einen ihrer Längsbereiche (17, 18), die der Länge der Klemmkörper (3) entsprechen, Einnehmungen aufweisen bzw. in ihrer Weite verengt sind.

3. Getriebe nach Anspruch 1 oder 2, **dadurch gekennzeichnet**, daß eine zwischen dem Antriebsrad (1) und dem Klemmring (5) wirkende Druckfeder (24) vorgesehen ist.

4. Getriebe nach Anspruch 3, **dadurch gekennzeichnet**, daß die Druckfeder (24) zwischen Antriebrad (1) und Abtriebsrad (8) angeordnet ist.

5. Getriebe nach Anspruch 3, **dadurch gekennzeichnet**, daß die Druckfeder (24) zwischen dem halsförmigen Flansch an An- oder Abtriebsrad (1; 8) und Ab- oder Antriebsrad (8; 1) angeordnet ist.

6. Getriebe nach Anspruch 3, **dadurch gekennzeichnet**, daß die Druckfeder (24) in einem Zwischenraum zwischen dem halsförmigen Flansch (20) an dem Antriebsrad (1) und dem halsförmigen Flansch (21) an dem Abtriebsrad (8) angeordnet ist.

## Claims

1. Gearing for the transmission of rotational movements in both directions of rotation, having freewheeling and latching, which act in such a manner that when power flows from a drive to a main drive pinion the gearing is freely rotatable in both directions of rotation and, when the power flow is reversed, it is locked, in particular a vehicle seat adjustment gearing with a freewheel brake which acts in both directions of rotation, wherein the gearing has a clamping ring (5) which is connected to a drive wheel (1) and which is provided with slanting surfaces (10), and, coaxial thereto, an inner ring (9) which is connected to a driven wheel (8), and clamping members (3) which are located between the clamping ring and the inner ring, in pairs between claws (2), which clamping members have spring-resilient elements (4) between them and which slide, in the freewheel position, between the inner ring and the clamping ring, and, in the locking position, are pressed against the slanting surfaces (10) thereof, and which, when the drive wheel (1) is turned, can be brought out of the locking position into the freewheel position by means of the claws (2) which are connected to the drive wheel, wherein the clamping ring (5) and the claws (2) comprise means which cooperate in a form-locking manner with one another to displace the clamping members (3) from the locking position into the freewheel position, characterised in that the length of the claws (2) is approximately twice as great as the length of the clamping members (3) and a longitudinal area (17) of the claws (2) is somewhat wider than the other longitudinal area (18), such that the clamping members (3) can be brought, in the case of axial displacement, from the locking position into the freewheeling position.

2. Gearing according to Claim 1, characterised in that on the drive wheel (1), there is disposed a neck-shaped flange (20), which is guided on a corresponding oppositely-directed flange (21) on the driven wheel (8), engaging in or around this other flange, and both flanges (20, 21) comprise, at their ends, opposite projections (22, 23) for the axial delimitation of the path, wherein the displacement path of the flanges (20, 21) corresponds to at least twice the axial length of the claws (2), which, for their part, contiguous with the drive wheel (1), comprise recesses or are narrowed as regards their width on one of their longitudinal areas (17, 18) which correspond to the length of the clamping members (3).

3. Gearing according to Claim 1 or 2, characterised in that a pressure spring (24), which acts between the drive wheel (1) and the clamping ring (5), is present.

4. Gearing according to Claim 3, characterised in that the pressure spring (24) is disposed between the drive wheel (1) and the driven wheel (8).

5. Gearing according to Claim 3, characterised in that the pressure spring (24) is disposed between the neck-shaped flange on the drive wheel or driven wheel (1;8) and the driven or drive wheel (8;1).

6. Gearing according to Claim 3, characterised in that the pressure spring (24) is disposed in an intermediate space between the neck-shaped flange (20) on the drive wheel (1) and the neck-shaped flange (21) on the driven wheel (8).

## Revendications

1. Mécanisme pour transmettre des mouvements de rotation dans les deux sens de rotation avec course libre et blocage, de façon que la rotation soit libre dans les deux sens si la force est dirigée du côté menant vers le côté mené et qu'elle soit bloquée si le flux de force est inversé, en particulier mécanisme pour un moyen de réglage de siège dans des véhicules automobiles avec un frein de course libre agissant dans les deux sens de rotation, le mécanisme comportant un anneau de serrage (5) relié à une roue menante (1) et pourvu de surfaces inclinées (10) et, coaxialement à celui-ci, un anneau intérieur (9) relié à une roue menée (8) ainsi que, entre eux, des corps de serrage (3) qui sont disposés par paires entre des griffes (2) et sont séparés l'un de l'autre par des éléments (4) ayant l'élasticité d'un ressort, qui, en position de course libre, glissent entre l'anneau intérieur et l'anneau de serrage et, en position de blocage, sont plaqués contre les surfaces inclinées (10) de ce dernier et qui, lors de la rotation de la roue menante (1), sont transférés par les griffes (2) reliées à celle-ci de la position de blocage à la position de course libre, l'anneau de serrage (5) et les griffes (2) comportant des moyens coopérant entre eux par complémentarité de formes pour faire passer les corps de serrage (3) de la position de blocage à la position de course libre, caractérisé en ce que la longueur des griffes (2) est environ deux fois supérieure à la longueur des corps de serrage (3) et une zone en longueur (17) des griffes (2) est légèrement plus large que l'autre zone en longueur (18), de sorte que les corps de serrage (3) peuvent passer de la position de blocage à la position de course libre en se déplaçant axialement.

2. Mécanisme selon la revendication 1, caractérisé en ce que sur la roue menante (1) est prévu un manchon en forme de collet (20) qui est guidé, en s'y insérant ou en l'entourant, contre un manchon correspondant en vis-à-vis (21) de la roue menée (8), et ces deux manchons (20, 21) comportent à leurs extrémités des saillies opposées (22, 23) pour en limiter la course axiale, la course de déplacement des manchons (20, 21) correspondant au moins au double de la longueur axiale des griffes (2) qui, pour leur part, en étant accolées à la roue menante (1), comportent des renfoncements ou sont rétrécies en largeur dans l'une de leurs zones en longueur (17, 18) correspondant à la longueur des corps de serrage (3).

3. Mécanisme selon la revendication 1 ou 2, caractérisé en ce qu'il est prévu un ressort de compression (24) agissant entre la roue menante (1) et l'anneau de serrage (5).

4. Mécanisme selon la revendication 3, caractérisé en ce que le ressort de compression (24) est disposé entre la roue menante (1) et la roue menée (8).

5. Mécanisme selon la revendication 3, caractérisé en ce que le ressort de compression (24) est disposé entre le manchon en forme de collet de la roue menante ou menée (1 ; 8) et la côté menée ou menante (8 ; 1).

6. Mécanisme selon la revendication 3, caractérisé en ce que le ressort de compression (24) est disposé dans un intervalle compris entre le manchon en forme de collet (20) de la roue menante (1) et le manchon en forme de collet (21) de la roue menée (8).
